# EUROPÄISCHE PATENTSCHRIFT

(11) **EP 2 718 239 B1**
(45) Veröffentlichungstag und Bekanntmachung des Hinweises auf die Patenterteilung: **26.08.2026**
(21) Anmeldenummer: 12716339.2
(22) Anmeldetag: 13.04.2012
(51) Int. Cl.: C03C 1/00, C03C 17/00

(54) **SEMITRANSPARENTES BESCHICHTUNGSMATERIAL**
SEMI-TRANSPARENT COATING MATERIAL
MATÉRIAU DE REVÊTEMENT SEMI-TRANSPARENT

(30) Priorität: 06.06.2011 DE 102011050872
(43) Veröffentlichungstag der Anmeldung: 16.04.2014
(73) Patentinhaber: SCHOTT AG, 55122 Mainz (DE); Inomat GmbH, 66538 Neunkirchen (DE)
(72) Erfinder: ANTON, Andrea, 55595 Hüffelsheim (DE); BREIER, Vera, 55345 Gau-Algesheim (DE); MILANOVSKA, Angelina, 55120 Mainz (DE); KNOCHE, Silke, 55291 Saulheim (DE); KALLEDER, Axel, 66540 Neunkirchen (DE); GIER, Andreas, 66399 Ormeshei (DE); BOCKMEYER, Matthias, 55116 Mainz (DE)
(74) Vertreter: Herrmann, Jochen
(86) Internationale Anmeldenummer: PCT/EP2012/056737
(87) Internationale Veröffentlichungsnummer: WO 2012/167977

(56) Entgegenhaltungen:
- EP-A1- 0 614 957
- WO-A1-01/20641
- WO-A2-02/50191
- JP-A- 2002 068 780
- JP-A- H 036 276
- JP-A- H0 536 339
- JP-A- H05 163 463

## Beschreibung

Die Erfindung betrifft die Verwendung eines Beschichtungsmaterials zur Erzeugung einer semitransparenten Beschichtung auf einer Glaskeramikkochfläche.

Aus dem Stand der Technik sind Beschichtungen auf Glas und Glaskeramik bekannt, die beispielsweise in Anzeigebereichen bei Kochflächen und bei anderen Bedienelementen im Haushaltsgerätebereich eingesetzt werden.

Insbesondere im Bereich von Kochfeldern werden seit Jahrzehnten Anzeigen eingesetzt, die z.B. durch einen roten Punkt kennzeichnen, welche Kochzonen höhere Temperaturen aufweisen. Diese Punkte sind nicht so konturenscharf, da die verwendeten Kochplatten eine genoppte Struktur auf der Unterseite aufweisen, die das Licht unterschiedlich bricht. Die Ansprüche an die Küchengeräte sind auch hinsichtlich der Bedienfreundlichkeit und Informationsbedarf größer geworden. So zeigt der Trend der letzten Jahre zu vermehrtem Einsatz von transparenter Glaskeramik für Kochflächen.

Transparente Glaskeramik hat jedoch den Nachteil, dass der gesamte technische Aufbau unterhalb der Kochfläche sichtbar ist. Um den Blick in das Innere des Gerätes zu verhindern, ist bekannt, die Glaskeramik mit unterschiedlichsten Beschichtungen versehen, die sowohl den technischen als auch den designerischen Ansprüchen genügen sollen.

Um insbesondere eine hohe Blickdichte zu erreichen, wird mit Beschichtungen bzw. Farben gearbeitet, die ein hohes Lichtabsorptionsvermögen haben, aber zugleich auch eine große Streuung aufweisen. Insbesondere im Anzeigenbereich führen solche Schichten mit einer hohen Streuung zu unscharfen, kontrastschwachen Anzeigen.

Es sind auch schon Anzeigen bekannt, die solche Streuungen nicht aufweisen. Die hierbei verwendeten Beschichtungen basieren auf Edelmetall. Dabei werden organisch gebundene Edelmetalle auf eine transparente Glaskeramik gedruckt, und durch einen Einbrennvorgang wird ein dünner Edelmetallfilm abgeschieden. Dieses Verfahren ist durch die Rohstoffpreise der Edelmetalle sehr teuer.

Weiterhin existieren semitransparente organische Lacksysteme beispielsweise auf Polyurethanbasis, welche jedoch nur eine niedrige Kratzbeständigkeit und Temperaturdauerbeständigkeit bis etwa 140 °C aufweisen.

Kratzbeständige Hybridpolymersysteme sind hingegen als Kratzschutzbeschichtungen für Kunststoffbrillengläser im Einsatz.

JP 2002 068780 A offenbart ein Glas, das für eine Fernbedienung verwendet wird. Auf das Glas ist eine dunkel eingefärbte Beschichtung aufgebracht. Diese Beschichtung ist für Infrarotstrahlung durchlässig.

WO 02/50191 A2 offenbart ein lösungsmittelarmes Sol-Gel-System, mit dem eine kratzfeste Beschichtung, beispielsweise auf Möbeloberflächen, erzeugt werden kann.

Ein weiteres Beschichtungsmaterial zur Beschichtung von Glasoberflächen ist aus JP 5 163 463 A bekannt.

Es ist Aufgabe der Erfindung, ein Beschichtungsmaterial anzugeben, das es ermöglicht, eine semitransparente Beschichtung auf einer Glaskeramik aufzubringen, die im sichtbaren Wellenlängenbereich keine Streuzentren aufweist und eine hohe Kratzfestigkeit zeigt. Das Beschichtungsmaterial soll über ein geeignetes Beschichtungsverfahren einseitig lokal strukturiert auf das Glas oder die Glaskeramik aufgebracht werden können. Im Ergebnis soll eine Beschichtung erzeugbar sein, die einerseits so blickdicht ist, dass der Blick ins Innere des Gerätes verhindert wird, die andererseits jedoch semitransparent ist, so dass die Anzeigefunktion konturenscharf und kontraststark erscheint.

Diese Aufgabe der Erfindung wird mit einer Verwendung eines Beschichtungsmaterials gemäß Patentanspruch 1 gelöst.

Gemäß einem Grundgedanken der Erfindung weist das Beschichtungsmaterial zumindest ein Sol-Gel-Hybridpolymerlacksystem mit einer hybridpolymeren Sol-Gel-basierten Matrix auf, und der Matrix sind Nanopartikel und nanoskalige Pigmente zugesetzt. Zusätzlich können auch Farbstoffe, insbesondere organische Farbstoffe, zugesetzt sein. Zur Erhöhung der Schichthärte und Kratzbeständigkeit und des Siebdruckverhaltens bzw. der Anpastung können beispielsweise nichtstreuende und nicht bzw. kaum im sichtbaren Wellenlängenbereich absorbierende Nanopartikel der hybridpolymeren Matrix zugesetzt werden.

Um eine hohe Kratzfestigkeit zu erreichen kann die Matrix mindestens eine Sol-Gel-Hybridpolymermatrix auf der Basis einer Auswahl aus Epoxyd, Methacrylat, Allyl oder Vinyl-Silan aufweisen. Die hier genannten Beschichtungsmaterialien bzw. Farben können eine hybridpolymere Sol-Gel-basierte Farbmatrix aufweisen, die mit Pigmenten und falls gewünscht zusätzlich mit Farbstoffen versehen ist.

Durch den Einsatz von anorganischen Nanopartikeln, vorzugsweise faserförmigen SiO₂-Nanopartikeln wird die Kratzbeständigkeit noch weiter verbessert. Dabei kann ein Sol-Gel-Binder mit SiO₂-Nanopartikeln verwendet werden, wobei das Massenverhältnis von Sol-Gel-Binder zu Nanopartikelmasse 10:1 bis 1:1, bevorzugt 5:1 bis 2:1, betragen kann.

Die Nanopartikel können dabei über eine Metalloxid- oder Halbmetalloxidbindung reaktiv in das Sol-Gel-Netzwerk eingebunden sein.

Gemäß einer Ausführungsform können die Nanopartikel eine kugelförmige oder sphärische Morphologie und einer Größe zwischen 4-200 nm, bevorzugt zwischen 10 - 150 nm, aufweisen.

Gemäß einer bevorzugten Ausführungsform können die Nanopartikel eine kettenförmige oder faserförmigen Morphologie aufweisen, mit einer durchschnittlichen Länge von 30 - 150 nm und einer durchschnittlichen Größe von 5 - 20 nm.

Dabei können anorganische, oxidische nicht streuende Nanopartikel, vorzugsweise SiO₂-basierte in einem nicht wässrigen Lösungsmittel dispergierte Nanopartikel, eingesetzt werden.

Da gerade bei Kochflächen durch falsches Bedienen auch im Anzeigenbereich hohe Temperaturen entstehen können, sind temperaturstabile Pigmente, Farbstoffe bzw. Verbindungen zu verwenden, um Verfärbungen der beschichten Kochfläche zu vermeiden. Erfindungsgemäß sind als Pigmente eine Auswahl aus folgenden Verbindungen ausgewählt: Titannitrid (TiN), Titancarbid (TiC), Zirkonnitrid (ZrN), Zirkoncarbid (ZrC), Kobalt-Eisen-Oxid, Mangan-Eisen-Oxid, NiFeO₄, CoZnFe₄O₈, CoFeO₄, NiZnF₄eO₈, Fe₂O₃, TiO₂ oder ZnO. Denkbar ist auch, die Verwendung von Titancarbonitrid (TiCxN1-x), Zirkoncarbonitrid (ZrCxN1-x), Si oder Aluminiumnitrid (AIN) oder CuO,

Als organische Farbstoffe können sowohl rein organische als auch metallorganische Farbstoffe und oder Metallkomplexfarbstoffe eingesetzt werden. Es werden dabei u.a. Anthrachinon -, Kupferphtalocyanin-, Triphenylmethan-, Azo-, Farbstoffe eingesetzt. In einer besonderen Ausführungsform werden dem Fachmann unter dem Markennamen Basacid, Basovit, Basonyl, Neozapon, Neptun, Orasol und oder Heliogen-Farbstoffe bekannte Farbstoffe eingesetzt. Unter anderem können beispielsweise Produkte der BASF mit der Markenbezeichnung Orasol 4GN, Orasol 2GLN, Orasol 2RLN, Orasol Orange G, Orasol Orange RG, Orasol Braun 2RL, Orasol Rot BL, Orasol Blau GN, Orasol Black RLi, Orasol Red G, Orasol Black X45, Orasol Black X55 eingesetzt werden.

Besonders bevorzugt ist eine schwarze semitransparente Beschichtung, die auf Basis von absorbierenden Pigmenten mit einer Korngröße im Nanometerbereich oder organischen Farbstoffen basiert.

Die niedrige Streuung der Schichten wird durch den Einsatz von entweder organischen oder anorganischen nanoskaligen Pigmenten erreicht. Dies kann durch Verwendung von absorbierenden Pigmenten mit einer Größe von 1-200 nm, bevorzugt 5-100 nm, besonders bevorzugt 10-50 nm, erreicht werden.

Als Pigmente können in besonders vorteilhafter Weise Pigmente eingesetzt werden, die bei der Wellenlänge des sichtbaren Lichtes nicht streuen. Dies können beispielsweise organische oder anorganische Absorptionspigmente sein.

Als anorganische Pigmente werden Nanopartikel eingesetzt. Um den Streuungsanteil zu minimieren, werden die Pigmente mit Korngrößen im Nanometerbereich eingesetzt. Dies ist notwendig, da Pigmente üblicher Weise nicht in identischer Korngröße sondern vielmehr in einer statistischen Korngrößenverteilung vorliegen. Selbst wenn der mittlere Korndurchmesser unterhalb von 200 nm liegt, gibt es bei herkömmlichen Pigmenten immer noch eine ausreichende Anzahl von Teilchen, die größer als 200 nm sind und somit Streuung verursachen.

Für nicht dunkle oder nicht schwarze Farborte können auch farbige anorganische Nanopartikel eingesetzt werden. Auch können Weißpigmente, besipielsweise TiO2 oder ZnO, in nanopartikulärer Form Anwendung finden.

Für all diese Pigmente gilt die bevorzugte Größe von 1-200 nm, besonders bevorzugt 5-100 nm, insbesondere bevorzugt 10-50 nm.

Durch den Einsatz von anorganischen Nanopartikeln, vorzugsweise faserförmigen anorganischen SiO₂-Nanopartikeln, lässt sich die Siebdruckfähigkeit und die Anpastung so verbessern, dass auf Eindicker, wie beispielsweise Cellulose oder Aerosil, ganz oder teilweise verzichtet werden kann.

Die Farbmatrix kann als anorganische Komponente ein Glas-Pulver aufweisen.

Als Binder können anorganische oder hybridpolmere Sol-Gel-Verbindungen, bevorzugt hydrolysierte Epoxyd-, Methacrylat-, Amino-, Mercapto, Allyl-, Vinyl-Alkoxyd-Silane und Mischungen derselben verwendet werden.

Zusätzlich kann die Sol-Gel-Matrix Bestandteile von Polyurethanharzen, organisch oder anorganisch vernetzende Silicone, Silkonharzen, Silaxane, Polysiloxanen, organischen Acrylatbasierende Systeme, bevorzugt Methacrylate, Epoxide, Polyamide, Polyimid und Mischungen derselben enthalten.

Der Binder kann molekulardisperse, kolloidaldisperse oder hybridpolymere Sol-Gel-Vorstufen einer Auswahl aus Silizium, Titan, Zirkon, Aluminium, Zink, Magnesium, Calcium, oder Zinn aufweisen.

Das härtbare Hybridpolymer kann Glycidyloxypropylltriethoxysilan, Glycidyloxypropylltrimethoxysilan, Vinyltriethoxysian, Allyltriethoxysilan, Methacryloxypropyltrimethoxysilan, Methacryloxypropyltriethoxysilan oder eine dergleichen hydrolysierte Alkoxysilanvorstufe mit einer oder mehreren UVvernetzbaren oder thermisch vernetzbaren organischen funktionellen Gruppen aufweisen.

Bevorzugt werden Nanopartikel verwendet, welche mit einem Binder verbunden werden, dessen Kondensationsgrad mehr als 60 % beträgt. Der Volumenanteil der Nanopartikel ist dabei vorzugsweise größer als 50 %.

Diese Binder können mit und ohne Nanopartikel eingesetzt werden.

Die hybridpolymere Vorstufe kann mit einem Tetra-Alkoxysilan in einer Hydrolyse und Kondensationsreaktion in Gegenwart von H₂O umgesetzt werden. Bevorzugt wird die Kondensationsreaktion dabei bei einem pH-Wert von 5-1 durchgeführt, bevorzugt 3-1. Als Säure können dabei HCl oder Paratoluolsulfonsäure verwendet werden.

Als Tertraalkoxysilan kann Tetraethoxysilan verwendet werden. Das bevorzugte Monomerverhältnis von Hybridpolymersilan zu Tetraalkoxysilan beträgt 2:1 - 5:1 bevorzugt 4:1. Der Silan-Vernetzungsgrad ist bevorzugt > 80 %, besonders bevorzugt > 85 %. Der Vernetzungsgrad kann dabei über 29 Si-NMR bestimmt werden.

Um die Siebdruckfähigkeit zu gewährleisten kann nach der Kondensation und Hydrolysereaktion das leicht flüchtige Lösungsmittel am Rotationsverdampfer entfernt werden. Dadurch wird das so genannte Hydrolysat erhalten. Diese Vorstufe bzw. das Hydrolysat kann als Binder für Nanopartikel, insbesondere oxidische, amorphe oder kristalline Nanopartikel, insbesondere SiO₂-Nanopartikel, verwendet werden.

Als Lösungsmittel können hoch siedende Lösungsmittel mit einem niedrigen Dampfdruck von < 1 bar, bevorzugt < 0,2 bar, besonders bevorzugt < 0,1 bar eingesetzt werden. Beispielsweise sind dies Lösungsmittel wie Terpineol, n-Butylacetat, Carbitol, Carbitolacetat, Etylenglykolmonoethylether, Diethylenglycolmonoethylether, und Tripropylencycolmonomethylether und Mischungen derselben.

Insbesondere eine für Siebdruck geeignete Farbmatrix kann ein hoch siedendes Lösungsmittel mit einem Dampfdruck < 5 hPa, bevorzugt < 2 hPa, besonders bevorzugt < 1 hPa benötigen.

Um die Kratzbeständigkeit zu erhöhen, können dem Beschichtungsmaterial Bis-epoxid, Bismethacrylat oder dergleichen organische Härter oder Vernetzer mit mehreren organischen vernetzbaren Gruppen zugegeben sein.

Das molare Verhältnis von vernetzbaren organischen Monomeren zu Monomer des eingesetzten Härters oder Vernetzers beträgt erfindungsgemäß 35:1 - 10:1, bevorzugt 25:1 - 15:1. Der Härter oder Vernetzer kann dabei 3,4-Epoxycyclohexancarboxylat oder Dimethylenbisacrylamid sein:
Um die Vernetzungsreaktion der organischen funktionellen Gruppen zu starten, können der Beschichtungslösung thermisch aktivierbare Starter zugegeben sein. Dies können beispielsweise Aluminiumacetylacetonat oder Metylimidazol sein.

Auch können der Beschichtungslösung UV-aktivierbare Starter wie beispielsweise lodonium, (4-methylphenyl)[4-(2-methylpropyl) phenyl]-, hexafluorophosphate (1-), Irgarcure 186 zugegeben werden.

In einer besonderen erfindungsgemäßen Ausführungsform können der Beschichtung Haftvermittler zugegeben werden. Dies können beispielsweise Amino und oder Mercaptosilane sein. Beispielsweise kann dies 3-Aminopropyltriethoxysilan oder 3-Mercaptopropyltrimethoxysilan. Der Anteil der Haftvermittlersilane kann dabei bezüglich der weiteren Alkoxysilane zwischen 1:30 bis 1:10, bevorzugt 1:20 - 1:15 sein.

Je nach Beschichtungsverfahren können auch noch verschiedene Verlaufsmittel, Entschäumer oder Entlüfter, beispielsweise PEG, BYK 302, BYK 306 oder Airex 931 zugegeben werden, um homogene Schichtdicken der Beschichtung zu erreichen.

Gemäß noch einem weiteren Grundgedanken der Erfindung ist das Beschichtungsmaterial als siebdruckfähiger 2-Komponenten-Lack auf Basis von Hybridpolymeren aus einer Mischung einer ersten und einer zweiten Komponentenmischung hergestellt, wobei die erste Komponentenmischung das Hybridpolymer und die zweite Komponentenmischung Nanopartikel in einem hochsiedenden Lösungsmittel aufweist. Die nanoskaligen Pigmente bzw. organischen Farbstoffe können dabei sowohl zu ersten als auch zur zweiten Komponente zugegeben werden.

Besonders bevorzugt werden siebdruckfähige 2-Komponenten-Lacke auf Basis von Epoxydsilanen verwendet. Dabei kann die erste Komponentenmischung eine im Wesentlichen lösungsmittelfreien Mischung von Epoxidsilan und Tertraethoxysilan und die zweite Komponentenmischung kettenförmige SiO₂-Nanopartikel aufweisen, die in Tripropylencycolmonomethylether oder Diethylenglycolmonoethylether dispergiert sein können.

Die kettenförmigen oder und faserförmigen SiO₂-Nanopartikel, weisen dabei bevorzugt einen Durchmesser zwischen 6 - 30 nm, bevorzugt einen Durchmesser von 8 - 20 nm, und eine Länge von 50 - 200 nm, bevorzugt einer Länge von 60 - 150 nm auf. Die Verwendung von faser- und/oder kettenfömigen Nanopartikeln bewirkt dabei eine besonders gute Siebdruckfähigkeit des Lackes und besonders gute Verlaufeigenschaften der Schichten. Es werden beispielsweise keine Löcher oder andere Defekte welche aufgrund schlechter Lackeigenschaften entstehen beobachtet.

Der ersten Komponentenmischung kann zur Vorvernetzung eine wässrige Lösung von pH 2 mit einem Starter, insbesondere Paratoluolsulfonsäure, zugesetzt sein.

Der zweiten Komponentenmischung kann ein Vernetzer, bevorzugt 3,4-Epoxycyclohexancarboxylat, und ein Verlaufvermittler oder Entlüfter zugegeben sein.

In einer besonderen erfindungsgemäßen Ausführungsform ist bevorzugt in einer der beiden Komponentenmischungen ein Pigment dispergiert oder ein organischer Farbstoff gelöst sein, wobei das Pigment TiN sein kann. Das TiN kann insbesondere in einer Primärpartikelgröße von 25 nm vorliegen.

Als organischer Farbstoff kann beispielsweise der organische Schwarzfarbstoff Orasol LR4 eingesetzt werden.

Durch Mischen der beiden Komponenten erhält man einen Siebdrucklack, der im Falle des TiN bei Temperaturen von bis zu 375 °C getrocknet und ausgehärtet werden kann, bevorzugt bei Temperaturen von 120 °C -180 °C.

Im Falle der Verwendung des organischen Farbstoffs kann die Beschichtung bis zu Temperaturen von kleiner 250°C, bevorzugt kleiner 230 °C, ganz besonders bevorzugt zwischen 180 - 140 °C getrocknet und ausgehärtet werden.

Bei einer Trocknungstemperatur, welche unter der Zersetzungstemperatur der organisch vernetzbaren Funktionalität, beispielsweise der Epoxy-Gruppe liegt, wird bevorzugt ein Vernetzungsgrad der organischen Funktionalitäten von 50 - 90 %, bevorzugt 60 - 80 % erreicht. Die Bestimmung des organischen Vernetzungsgrads kann dabei über die dem Fachmann bekannte Methode der Ramanspektroskopie erfolgen.

In einer weiteren erfindungsgemäßen Ausführungsform kann die organische Schichthärtung auch durch den Einsatz einer UV-Quelle erfolgen. Es wird ebenfalls bevorzugt ein organischer Vernetzungsgrad in der Schicht > 50 %, bevorzugt > 60 % erreicht.

Durch den hohen Anteil an Si und gegebenenfalls anorganischen Pigmenten liegt der Massenverlust einer besonderen erfindungsgemäßen Beschichtung nach einer Pyrolysetemperatur von 600 °C, bestimmt beispielsweise über Thermogravimetrie mit einer Aufheizrate von 10 Kelvin pro min, zwischen 20 - 60 mass-%, bevorzugt zwischen 50 - 30 mass-%.

Die Viskosität von erfindungsgemäßen siebdruckfähigen Lacken liegt bevorzugt bei 500 mPa*s - 3000 mPa*s, besonders bevorzugt bei 700 - 1500 mPa*s.

Die Transmission des erfindungsgemäßen Beschichtungsmaterial bzw. der erzeugten Beschichtung kann im sichtbaren Wellenlängenbereich zwischen 2 - 15 %, bevorzugt zwischen 3 -12 % liegen.

Das Beschichtungsmaterial kann durch ein Druckverfahren aufgebracht werden. Dieses Druckverfahren kann ein Ink-Jet-Druck-, Off-Set-Druck--, Tampon-Druck-, Rollcoating-, Tauch-, Spin-Coating- oder Sprüh-Verfahren sein.

Gemäß einer bevorzugten Ausführungsform kann das Druckverfahren ein Siebdruckverfahren sein.

Die Viskosität der Farbmatrix, insbesondere das Thixotropieverhalten für Siebdruckverfahren, kann vor dem Drucken über den Lösungsmittelgehalt, den Nanopartikelgehalt oder die Oberfläche und Morphologie der eingesetzten Nanopartikel an das ausgewählte Druckverfahren angepasst werden.

Weiterhin kann die Viskosität der Farbmatrix vor dem Drucken durch Zugabe von Aerosilen, flammenpyrolytischen bzw. per Fällungsprozess hergestellten SiOₓ bzw. AlₓO_{y}-Partikeln, Cellulose-Verbindungen, Polyvinylpyrolidon, Polyethylenglykol oder Block-Co-Polymeren oder dergleichen organische Eindicker an das ausgewählte Druckverfahren angepasst werden.

Nach der Beschichtung können die Farbschichten thermisch gehärtet oder UV-gehärtet werden. Dabei kann die Beschichtung im Falle der Verwendung von anorganischer, keramischer Farbe nach dem Drucken bei Temperaturen von > 500 °C, bevorzugt > 700 °C, eingebrannt werden.

Dagegen kann die Beschichtung im Falle der Verwendung von organischen Pigmenten nach dem Drucken UV-gehärtet oder bei Temperaturen < 200 °C thermisch ausgehärtet werden.

Die Beschichtung kann gemäß einer bevorzugten Ausführungsform über Siebdruck mittels eines 140er Siebgewebes aufgebracht werden.

Die Erfindung wird nachfolgend anhand von Ausführungsbeispielen näher erläutert.

### Ausführungsbeispiel 1:

### Herstellung Komponente 1:

Es werden 0,08 mol GPTES (Glycidyloxypropyltriethoxysilan) mit 0,02 mol TEOS (Tetraethoxysilan) mit 0,125 mol Paratoluolsäure versetztem Wasser hydrolysiert, Anschließend wird das Lösungsmittel am Rotationsverdampfer entfernt und 22,6 g Binder erhalten. Dieser Lösung werden 0,5 g Methylimidazol hinzugegeben.

### Herstellung Komponente 2:

Als nanopartikelhaltige Lösung wird eine 40 Mass-% Dispersion von 15 nm großen kettenförmigen SiO₂-Partikel in Tripropylenglycolmonomethylether eingesetzt.

20 g dieser Lösung werden 1,0 g 3,4-Epoxycyclohexancarboxylat, 5 g TiN mit Primärpartikelgröße 25 nm, 0,4 g Airex 931 und 0,2 g BYK 302 zugegeben.

Nach Vereinigung der Komponenten 1 und 2 wird mittels Siebdruck mit einem 140er Sieb eine 5 µm dicke Schicht auf eine transparente Glaskeramik aufgebracht. Die Farbe wird 30 min bei 180 °C eingebrannt.

### Ausführungsbeispiel 2:

### Herstellung Komponente 1:

Als nanopartikelhaltige Lösung wird eine 38 Mass-% Dispersion von kettenförmigen SiO2-Partikeln (15 nm Primärpartikelgröße mit einer Kettenlänge von 50 - 150 nm) in Diethylenglycolmonoethylether (DEGMEE) eingesetzt.

27 g dieser Lösung werden 1,4 g (3,4-Epoxycyclomethyl) 3,4epoxycyclohexanecarboxylate, 4,0 g Farbstoff Orasol RLI und 0,6 g 1,5 - Diazobicyclo[4.3.0]non-5-ene zugegeben.

Komponente 1 wird 12 h gerührt.

### Herstellung Komponente 2:

Es werden 0,08 mol GPTES (Glycidyloxypropyltriethoxysilan) mit 0,02 mol TEOS (Tetraethoxysilan) mit 0,018 mol Paratoluolsäure versetztem Wasser hydrolysiert. Anschließend wird das Lösungsmittel am Rotationsverdampfer entfernt und 23,0 g Binder erhalten.

Nach Vereinigung der Komponenten 1 und 2 wird mittels Siebdruck mit einem 140 er Sieb eine ca. 5 µm dicke Schicht auf eine transparente Lithiumalumosilicat (LAS) Glaskeramik aufgebracht. Die Farbe wird 1 h bei 170 °C eingebrannt.

## Patentansprüche

1. Verwendung eines Beschichtungsmaterials zur Erzeugung einer semitransparenten Beschichtung auf einer Glaskeramikkochfläche, wobei das Beschichtungsmaterial oder die erzeugte Beschichtung im sichtbaren Wellenlängenbereich eine Transmission zwischen 2 - 15 % aufweist,
wobei das Beschichtungsmaterial zumindest ein Lacksystem mit einer hybridpolymeren Sol-Gel-basierten Matrix aufweist,
wobei der hybridpolymeren Sol-Gel-basierte Matrix Nanopartikel und nanoskalige Pigmente zugesetzt sind, wobei die nanoskaligen Pigmente eine Größe von 1 - 200 nm, bevorzugt 5 - 100 nm, besonders bevorzugt 10 - 50 nm, aufweisen,
wobei als Pigmente eine Auswahl aus folgenden Verbindungen ausgewählt wird: Titannitrid (TiN), Titancarbid (TiC), Zirkonnitrid (ZrN), Zirkoncarbid (ZrC), Kobalt-Eisen-Oxid, Mangan-Eisen-Oxid, NiFeO₄, CoZnFe₄O₈, CoFeO₄, NiZnF₄eO₈, Fe₂O₃, TiO₂ oder ZnO,
und wobei das molare Verhältnis von vernetzbaren organischen Monomeren zu Monomer des eingesetzten Härters oder Vernetzers 35:1 - 10:1 beträgt.

2. Verwendung nach Anspruch 1,
**dadurch gekennzeichnet,**
**dass** die hybridpolymeren Sol-Gel-basierte Matrix mindestens eine Sol-Gel-Hybridpolymermatrix auf der Basis einer Auswahl aus Epoxyd, Methacrylat, Allyl oder Vinyl-Silan aufweist.

3. Verwendung nach einem der vorangegangenen Ansprüche,
**gekennzeichnet**
**durch** einen Sol-Gel-Binder mit SiO₂-Nanopartikeln, wobei das Massenverhältnis von Sol-Gel -Binder zu Nanopartikelmasse 10:1 bis 1:1, bevorzugt 5:1 bis 2:1 beträgt, und/oder
dass die Nanopartikel über eine Metalloxid- oder Halbmetalloxidbindung reaktiv in das Sol-Gel-Netzwerk eingebunden sind.

4. Verwendung nach einem der vorangegangenen Ansprüche,
**dadurch gekennzeichnet,**
**dass** die Nanopartikel eine kugelförmige oder sphärische Morphologie und einer Größe zwischen 4-200 nm, bevorzugt zwischen 10 - 150 nm, aufweisen, oder
**dass** die Nanopartikel eine kettenförmige oder faserförmigen Morphologie aufweisen, mit einer durchschnittliche Länge von 50 - 150 nm und einer durchschnittlichen Größe von 5 - 25 nm.

5. Verwendung nach einem der vorangegangenen Ansprüche
**dadurch gekennzeichnet,**
**dass** die hybridpolymeren Sol-Gel-basierte Matrix Bestandteile von Polyurethanharzen, organisch oder anorganisch vernetzend Siliconen, Polysiloxanen, organischen acrylatbasierenden Systemen, bevorzugt Methacrylaten, Epoxide, Polyamide, Polyimid und Mischungen derselben aufweist.

6. Verwendung nach einem der vorangegangenen Ansprüche,
**gekennzeichnet**
**durch** anorganische Sol-Gel-Verbindungen, bevorzugt hydrolysierte Epoxyd-, Methacrylat-, Allyl-, Vinyl- Alkoxyd-Silane und Mischungen derselben als Binder, und/oder
dass der Binder molekulardisperse, kolloidaldisperse Sol-Gel-Vorstufen einer Auswahl aus Silizium, Titan, Zirkon, Aluminium, Zink, Magnesium, Calcium, oder Zinn aufweist.

7. Verwendung nach einem der vorangegangenen Ansprüche,
**dadurch gekennzeichnet,**
**dass** das härtbare Hybridpolymer Glycidyloxypropyltriethoxysilan, Glycidyloxypropyltrimethoxysilan, Vinyltriethoxysian, Allyltriethoxysilan, Methacryloxypropyltrimethoxysilan, Methacryloxypropyltriethoxysilan oder eine dergleichen hydrolysierte Alkoxysilanvorstufe mit einer oder mehreren UVvernetzbaren oder thermisch vernetzbaren organischen funktionellen Gruppen ist.

8. Verwendung nach einem der vorangegangenen Ansprüche
**dadurch gekennzeichnet,**
**dass** Bis-epoxid, Bismethacrylat oder dergleichen organische Härter oder Vernetzer mit mehreren organischen vernetzbaren Gruppen zugegeben sind, und/oder
**dass** das molare Verhältnis von vernetzbaren organischen Monomeren zu Monomer des eingesetzten Härters oder Vernetzers 25:1 - 15:1 beträgt, und/oder
**dass** der Härter oder Vernetzer 3,4-Epoxycyclohexancarboxylat ist und/oder
**dass** Aluminiumacetylacetonat, Metylimidazol oder dergleichen thermisch aktivierbare Starter zugegeben sind, und/oder
**dass** lodonium, (4-methylphenyl)[4-(2-methylpropyl) phenyl]-, hexafluorophosphate (1-), Irgarcure 186 oder dergleichen UV-aktivierbare Starter zugegeben sind.

9. Verwendung nach einem der vorangegangenen Ansprüche,
**dadurch gekennzeichnet,**
**dass** das Beschichtungsmaterial als siebdruckfähiger 2-Komponenten-Lack auf Hybridpolymer-Basis aus einer Mischung einer ersten und einer zweiten Komponentenmischung hergestellt ist, wobei die erste Komponentenmischung das Hybridpolymer und die zweite Komponentenmischung Nanopartikel und die erste und/oder die zweite Komponentenmischung nanoskalige Pigmente und/oder Farbstoffe aufweist.

10. Verwendung nach Anspruch 9,
**dadurch gekennzeichnet,**
**dass** die erste Komponentenmischung eine im Wesentlichen lösungsmittelfreien Mischung von Epoxydsilan und Tertraethoxysilan aufweist, und
**dass** die zweite Komponentenmischung kettenförmige SiO₂-Nanopartikeln aufweist, und/oder
**dass** die SiO₂-Nanopartikel in Tripropylenglycolmonomethylether dispergiert sind.

11. Verwendung nach Anspruch 9 oder 10,
**dadurch gekennzeichnet,**
**dass** der zweiten Komponentenmischung ein Vernetzer, bevorzugt 3,4-Epoxycyclohexancarboxylat, und ein Verlaufvermittler oder Entlüfter zugegeben sind.

12. Verwendung nach einem der Ansprüche 9 bis 10,
**dadurch gekennzeichnet,**
**dass** in der ersten oder zweiten Komponentenmischung ein Pigment dispergiert oder gelöst ist, wobei insbesondere vorgesehen sein kann,
**dass** das Pigment TiN ist, insbesondere mit einer Primärpartikelgröße von 25 nm, oder
**dass** das Pigment das organische Schwarzpigment Orasol LR4 ist.

13. Verfahren zum Aufbringen eines Beschichtungsmaterials nach einem der Ansprüche 1 bis 12,
**dadurch gekennzeichnet,**
**dass** das Beschichtungsmaterial durch ein Druckverfahren ausgewählt aus der Auswahl von Ink-Jet-Druck, Off-Set-Druck, Tampon-Druck, Rollcoating, Tauchverfahren, Spin-Coating oder Sprühverfahren, bevorzug durch Siebdruck, aufgebracht wird.

14. Verfahren nach Anspruch 13,
**dadurch gekennzeichnet,**
**dass** die Viskosität der Farbmatrix, insbesondere das Thixotropieverhalten für Siebdruckverfahren, vor dem Drucken über den Lösungsmittelgehalt, den Nanopartikelgehalt oder die Oberfläche und Morphologie der eingesetzten Nanopartikel an das ausgewählte Druckverfahren angepasst wird, und/oder dass die Viskosität der Farbmatrix vor dem Drucken durch Zugabe von Aerosilen, flammenpyrolytischen bzw. per Fällungsprozess hergestellten SiOₓ bzw. AlₓO_{y}-Partikeln, Cellulose-Verbindungen, Polyvinylpyrilidon, Polyethylenglykol oder Block-Co-Polymeren oder dergleichen organische Eindicker an das ausgewählte Druckverfahren angepasst wird.

15. Verfahren nach Anspruch 13 oder 14, **dadurch gekennzeichnet, dass** die Beschichtung im Falle der Verwendung von anorganischer, keramischer Farbe nach dem Drucken bei Temperaturen von > 500 °C, bevorzugt > 700 °C, eingebrannt wird, oder die Beschichtung im Falle der Verwendung von organischen Pigmenten nach dem Drucken UV-gehärtet oder bei Temperaturen < 200 °C thermisch ausgehärtet wird.

## Claims

1. Use of a coating material to produce a semitransparent coating on a glass-ceramic cooktop, wherein the coating material or the resulting coating has a transmittance of between 2 and 15% in the visible wavelength range,
wherein the coating material comprises at least one paint system with a hybrid polymer sol-gel-based matrix,
wherein nanoparticles and nanoscale pigments are added to the hybrid polymer sol-gel-based matrix, wherein the nanoscale pigments have a size of 1-200 nm, preferably 5-100 nm, and most preferably 10-50 nm,
wherein the pigments are selected from the following compounds: titanium nitride (TiN), titanium carbide (TiC), zirconium nitride (ZrN), zirconium carbide (ZrC), cobalt-iron oxide, manganese-iron oxide, NiFeO₄, CoZnFe₄O₈, CoFeO₄, NiZnF₄eO₈, Fe₂O₃, TiO₂, or ZnO,
and wherein the molar ratio of crosslinkable organic monomers to the monomer of the curing agent or crosslinker used is 35:1 to 10:1.

2. Use according to claim 1,
**characterized**
**in that** the hybrid polymer sol-gel-based matrix comprises at least one sol-gel hybrid polymer matrix based on a selection of epoxy, methacrylate, allyl, or vinyl silane.

3. Use according to any of the preceding claims,
**characterized**
**by** a sol-gel binder containing SiO₂ nanoparticles, wherein the mass ratio of sol-gel binder to nanoparticle mass is 10:1 to 1:1, preferably 5:1 to 2:1, and/or in that the nanoparticles are reactively incorporated into the sol-gel network via a metal oxide or semimetal oxide bond.

4. Use according to any one of the preceding claims,
**characterized in**
**that** the nanoparticles have a spherical morphology and a size between 4 and 200 nm, preferably between 10 and 150 nm, or
**that** the nanoparticles have a chain-like or fibrous morphology, with an average length of 50-150 nm and an average size of 5-25 nm.

5. Use according to any of the preceding claims
**characterized in that**
the hybrid polymer sol-gel-based matrix comprises components of polyurethane resins, organically or inorganically cross-linked silicones, polysiloxanes, organic acrylate-based systems, preferably methacrylates, epoxides, polyamides,polyimide, and mixtures thereof.

6. Use according to any of the preceding claims,
**characterized**
**by** inorganic sol-gel compounds, preferably hydrolyzed epoxy-, methacrylate-, allyl-, vinyl-, and alkoxide silanes and mixtures thereof as binders, and/or that the binder comprises molecularly dispersed, colloidally dispersed sol-gel precursors selected from silicon, titanium, zirconium, aluminum, zinc, magnesium, calcium, or tin.

7. Use according to any of the preceding claims,
**characterized**
**in that** the curable hybrid polymer comprises glycidyloxypropyltriethoxysilane, glyc-idyloxypropyltrimethoxysilane, vinyltriethoxysilane, allyltriethoxysilane, methacryloxypropyltrimethoxysilane, methacryloxypropyltriethoxysilane, or a similar hydrolyzed alkoxysilane precursor having one or more UV-crosslinkable or thermally crosslinkable organic functional groups.

8. Use according to any of the preceding claims
**characterized**
**in that** bis-epoxide, bismethacrylate, or similar organic curing agents or crosslinkers with multiple organic crosslinkable groups are added, and/or
that the molar ratio of crosslinkable organic monomers to the monomer of the curing agent or crosslinking agent used is 25:1 to 15:1, and/or
that the curing agent or crosslinking agent is 3,4-epoxycyclohexanecarboxylate and/or
that aluminum acetylacetonate, methylimidazole, or similar thermally activatable initiators are added, and/or
that iodonium, (4-methylphenyl)[4-(2-methylpropyl)phenyl]-, hexafluorophosphate (1-), Irgarcure 186, or similar UV-activatable initiators are added.

9. Use according to any of the preceding claims,
**characterized**
**in that** the coating material is produced as a screen-printable, two-component, hybrid polymer-based coating consisting of a mixture of a first and a second component mixture, wherein the first component mixture comprises the hybrid polymer and the second component mixture comprises nanoparticles, and the first and/or the second component mixture comprises nanoscale pigments and/or dyes.

10. Use according to claim 9,
**characterized**
**in that** the first component mixture comprises a substantially solvent-free mixture of epoxysilane and tetraethoxysilane, and
that the second component mixture comprises chain-shaped SiO₂ nanoparticles, and/or
that the SiO₂ nanoparticles are dispersed in tripropylene glycol monomethyl ether.

11. Use according to claim 9 or 10,
**characterized**
**in that** a crosslinking agent, preferably 3,4-epoxycyclohexanecarboxylate, and a flow agent or defoamer are added to the second component mixture.

12. Use according to any one of claims 9 through 10,
**characterized**
**in that** a pigment is dispersed or dissolved in the first or second component mixture, wherein it may in particular be provided
that the pigment is TiN, in particular with a primary particle size of 25 nm, or
that the pigment is the organic black pigment Orasol LR4.

13. A method for applying a coating material according to any one of claims 1 through 12,
**characterized**
**in that** the coating material is applied by a printing process selected from the group consisting of inkjet printing, offset printing, pad printing, roll coating, dip coating, spin coating, or spray coating, preferably by screen printing.

14. Method according to claim 13,
**characterized**
**in that** the viscosity of the ink matrix-in particular, the thixotropic behavior for screen printing-is adjusted prior to printing to suit the selected printing method by controlling the solvent content, the nanoparticle content, or the surface area and morphology of the nanoparticles used,
and/or in that the viscosity of the ink matrix is adjusted prior to printing to suit the selected printing process by adding aerosils, SiOₓ or AlₓO_{y} particles produced by flame pyrolysis or precipitation, cellulose compounds, polyvinylpyrrolidone, polyethylene glycol, block copolymers, or similar organic thickeners.

15. Method according to claim 13 or 14,
**characterized**
**in that**, when inorganic ceramic pigments are used, the coating is fired after printing at temperatures of > 500 °C, preferably > 700 °C; or, when organic pigments are used, the coating is UV-cured or thermally cured at temperatures < 200 °C after printing.

## Revendications

1. Utilisation d'un matériau de revêtement pour produire un revêtement semi-transparent sur une plaque de cuisson en vitrocéramique, le matériau de revêtement ou le revêtement produit présentant une transmission comprise entre 2 et 15 % dans le domaine des longueurs d'onde visibles,
le matériau de revêtement comprenant au moins un système de peinture à matrice hybride polymère de type sol-gel,
à laquelle sont ajoutées des nanoparticules et des pigments à l'échelle nanométrique, les pigments à l'échelle nanométrique ayant une taille comprise entre 1 et 200 nm, de préférence entre 5 et 100 nm, et de manière particulièrement préférée entre 10 et 50 nm,
les pigments étant choisis parmi les composés suivants : nitrure de titane (TiN), carbure de titane (TiC), nitrure de zirconium (ZrN), carbure de zirconium (ZrC), oxyde de cobalt et de fer, oxyde de manganèse et de fer, NiFeO4, CoZnFe4O8, CoFeO4, NiZnF4eO8, Fe2O3, TiO2 ou ZnO,
et dans laquelle le rapport molaire entre les monomères organiques réticulables et le monomère de l'agent durcisseur ou de réticulation utilisé est compris entre 35:1 et 10:1.

2. Utilisation selon la revendication 1,
**caractérisée**
**en ce que** la matrice hybride polymère de type sol-gel comprend au moins une matrice hybride polymère sol-gel à base d'une sélection parmi l'époxyde, le méthacrylate, l'allylsilane ou le vinylsilane.

3. Utilisation selon l'une des revendications précédentes,
**caractérisée**
**par** un liant sol-gel contenant des nanoparticules de SiO2, le rapport massique entre le liant sol-gel et la masse des nanoparticules étant compris entre 10:1 et 1:1, de préférence entre 5:1 et 2:1, et/ou
en ce que les nanoparticules sont intégrées de manière réactive dans le réseau sol-gel par l'intermédiaire d'une liaison d'oxyde métallique ou d'oxyde semi-métallique.

4. Utilisation selon l'une des revendications précédentes,
**caractérisée**
**en ce que** les nanoparticules présentent une morphologie sphérique et une taille comprise entre 4 et 200 nm, de préférence entre 10 et 150 nm, ou
que les nanoparticules présentent une morphologie en chaîne ou fibreuse, avec une longueur moyenne de 50 à 150 nm et une taille moyenne de 5 à 25 nm.

5. Utilisation selon l'une des revendications précédentes
**caractérisée**
**en ce que** la matrice hybride polymère de type sol-gel comprend des composants issus de résines de polyuréthane, de silicones à réticulation organique ou inorganique, de polysiloxanes, de systèmes organiques à base d'acrylates, de préférence de méthacrylates, d'époxydes, de polyamides,
polyimide et des mélanges de ceux-ci.

6. Utilisation selon l'une des revendications précédentes,
**caractérisée**
**par** des composés sol-gel inorganiques, de préférence des époxydes hydrolysés, des méthacrylates, des allyles, des vinylalcoxysilanes et des mélanges de ceux-ci en tant que liant, et/ou
en ce que le liant comprend des précurseurs sol-gel en dispersion moléculaire ou colloïdale choisis parmi le silicium, le titane, le zirconium, l'aluminium, le zinc, le magnésium, le calcium ou l'étain.

7. Utilisation selon l'une des revendications précédentes,
**caractérisée**
**en ce que** le polymère hybride durcissable comprend du glycidyloxypropyltriéthoxy-silane, le glycidyloxypropyltriméthoxysilane, le vinyltriéthoxysilane, l'allyltriéthoxy-silane, le méthacryloxypropyltriméthoxysilane, le méthacryloxypropyltriéthoxysi-la ne ou un précurseur d'alcoxysilane hydrolysé similaire comportant un ou plusieurs groupes fonctionnels organiques réticulables par UV ou par voie thermique.

8. Utilisation selon l'une des revendications précédentes
**caractérisée**
**en ce que** des durcisseurs ou agents de réticulation organiques tels que le bis-époxyde, le bisméthacrylate ou similaires, comportant plusieurs groupes organiques réticulables, sont ajoutés, et/ou
que le rapport molaire entre les monomères organiques réticulables et le monomère du durcisseur ou de l'agent de réticulation utilisé est compris entre 25:1 et 15:1, et/ou
que le durcisseur ou l'agent de réticulation est le 3,4-époxycyclohexanecarboxylate et/ou
que de l'acétylacétonate d'aluminium, du méthylimidazole ou des initiateurs ther-mosensibles similaires sont ajoutés, et/ou
que de l'iodonium, (4-méthylphényl)[4-(2-méthylpropyl)phényl]-, l'hexafluorophosphate (1-), l'Irgarcure 186 ou des initiateurs photosensibles aux UV similaires sont ajoutés.

9. Utilisation selon l'une des revendications précédentes,
**caractérisée**
**en ce que** le matériau de revêtement est fabriqué sous forme de laque à deux composants, apte à la sérigraphie, à base de polymère hybride, à partir d'un mélange de composants, le premier mélange de composants contenant le polymère hybride et le deuxième mélange de composants contenant des nanoparticules, et le premier et/ou le deuxième mélange de composants contenant des pigments et/ou des colorants à l'échelle nanométrique.

10. Utilisation selon la revendication 9,
**caractérisée**
**en ce que** le premier mélange de composants comprend un mélange essentiellement exempt de solvant d'époxydesilane et de tétraéthoxysilane, et
**en ce que** le deuxième mélange de composants comprend des nanoparticules de SiO2 en forme de chaîne,
et/ou
que les nanoparticules de SiO2 sont dispersées dans de l'éther monométhylique de tripropylèneglycol.

11. Utilisation selon la revendication 9 ou 10,
**caractérisée**
**en ce qu'**un agent de réticulation, de préférence du 3,4-époxycyclohexanecarboxylate, et un agent de fluidification ou un agent désaérateur sont ajoutés au deuxième mélange de composants.

12. Utilisation selon l'une des revendications 9 à 10,
**caractérisée**
**en ce qu'**un pigment est dispersé ou dissous dans le premier ou le deuxième mélange de composants, étant entendu qu'il peut notamment être prévu
que le pigment soit du TiN, en particulier avec une taille de particules primaires de 25 nm, ou
que le pigment soit le pigment noir organique Orasol LR4.

13. Procédé d'application d'un matériau de revêtement selon l'une des revendications 1 à 12,
**caractérisé**
**en ce que** le matériau de revêtement est appliqué par un procédé d'impression choisi parmi l'impression à jet d'encre, l'impression offset, la tampographie, l'enduction au rouleau, l'immersion, l'enduction par centrifugation ou la pulvérisation, de préférence par sérigraphie.

14. Procédé selon la revendication 13,
**caractérisé**
**en ce que** la viscosité de la matrice d'encre, en particulier le comportement thixotrope pour les procédés de sérigraphie, est adaptée avant l'impression au procédé d'impression choisi par le biais de la teneur en solvant, de la teneur en nanoparticules ou de la surface et de la morphologie des nanoparticules utilisées, et/ou en ce que la viscosité de la matrice d'encre est adaptée au procédé d'impression choisi avant l'impression par l'ajout d'aérosils, de particules de SiOx ou d'AlxOy obtenues par pyrolyse à la flamme ou par précipitation, de composés de cellulose, de polyvinylpyrrolidone, de polyéthylèneglycol ou de copolymères à blocs, ou d'épaississants organiques similaires.

15. Procédé selon la revendication 13 ou 14, **caractérisé en ce que**, en cas d'utilisation d'une encre inorganique céramique, le revêtement est cuit après impression à des températures > 500 °C, de préférence > 700 °C, ou, en cas d'utilisation de pigments organiques, le revêtement est durci aux UV après impression ou durci thermiquement à des températures < 200 °C.
